# EUROPÄISCHE PATENTSCHRIFT

(11) **EP 1 157 296 B1**
(45) Veröffentlichungstag und Bekanntmachung des Hinweises auf die Patenterteilung: **18.12.2002**
(21) Anmeldenummer: 00912397.7
(22) Anmeldetag: 29.02.2000
(51) Int. Cl.: G02B 6/44, H01B 17/00, H01B 19/00

(54) **LICHTWELLENLEITERANORDNUNG**
OPTICAL FIBRE ARRANGEMENT
DISPOSITIF A FIBRE OPTIQUE

(30) Priorität: 02.03.1999 DE 19909159
(43) Veröffentlichungstag der Anmeldung: 28.11.2001
(73) Patentinhaber: SIEMENS AKTIENGESELLSCHAFT, 80333 München (DE)
(72) Erfinder: HÖFNER, Roland, D-96328 Küps (DE)
(86) Internationale Anmeldenummer: DE0000574
(87) Internationale Veröffentlichungsnummer: WO00052508

(56) Entgegenhaltungen:
- EP-A- 0 146 845
- EP-A- 0 265 737
- DE-A- 3 815 717
- DE-A- 19 732 489
- DE-B- 2 034 884

## Beschreibung

Die Erfindung bezieht sich auf eine Lichtwellenleiteranordnung mit einem Lichtwellenleiter zur Übertragung von Informationen über eine elektrische Potentialdifferenz hinweg, wobei der Lichtwellenleiter innerhalb einer flexiblen isolierenden Hülle angeordnet ist, die zumindest auf einem Teilstück umlaufende Schirme aus einem Isoliermaterial aufweist.

Eine derartige Lichtwellenleiteranordnung wird z.B. in der DE 197 32 489 A1 vorgeschlagen und ermöglicht gegenüber der Verlegung eines Lichtwellenleiters im Inneren eines starren Isolierstützers auch den nachträglichen Einbau an verschiedensten Stellen einer Hochspannungsanlage. Die Verlegung einer Lichtwellenleiteranordnung in einem starren Isolierstützer ist beispielsweise aus der EP 0 146 845 A2 oder der EP 0 265 737 A1 bekannt.

Durch die Flexibilität der Lichtwellenleiteranordnung werden Dehnungen, Bewegungen, Erschütterungen und ähnliche mechanische Belastungen abgefangen. Zudem ist auch die Führung der Lichtwellenleiteranordnung an Hindernissen vorbei in einfacher Weise möglich.

Um den Lichtwellenleiter vor Zugkräften zu schützen, die beispielsweise durch Gewichtskräfte auf die Lichtwellenleiteranordnung hervorgerufen werden, ist aus der DE 197 32 489 A1 weiter bekannt, parallel zu den Lichtwellenleitern zugfeste Stabilisierungselemente beispielsweise in Form von GFK-Stangen vorzusehen, die von der Hülle umgeben sind. GFK ist dabei die Abkürzung für einen mit Glasfasern verstärkten Kunststoff.

Nachteiligerweise ist das Einbringen der Stabilisierungselemente in die Lichtwellenleiteranordnung mit einem erheblichen Aufwand verbunden. Sowohl zum Einbringen der Stabilisierungselemente in einen üblicherweise vorhandenen Mantel, welcher den Lichtwellenleiter aufnimmt, als auch zum Einbringen der Stabilisierungselemente in das Schirmmaterial ist eine aufwendige Haltevorrichtung zum Fixieren der Lichtwellenleiteranordnung erforderlich.

Weiter können einzelne Stabilisierungselemente zwangsläufig nicht so angeordnet werden, daß auf den Lichtwellenleiter keine Zugbelastung mehr einwirkt.

Aufgabe der Erfindung ist es, eine Lichtwellenleiteranordnung der eingangs genannten Art anzugeben, in welcher der Lichtwellenleiter gegenüber dem Stand der Technik noch besser vor mechanischen Belastungen geschützt ist. Eine solche Lichtwelienleiteranordnung soll zudem kostengünstig und einfach herstellbar sein.

Die Aufgabe wird erfindungsgemäß dadurch gelöst, daß die Schirme unmittelbar auf einen Mantel aus einem glasfaserverstärkten Kunststoff aufgebracht sind, welcher Mantel den Lichtwellenleiter aufnimmt.

Durch die Umhüllung des Lichtwellenleiters mit einem Mantel aus einem glasfaserverstärkten Kunststoff ist dieser wirksam vor mechanischen Belastungen geschützt. Bei Zug- oder Biegebelastungen befindet sich der Lichtwellenleiter gewissermaßen in der neutralen Faser. Das Umhüllen von Lichtwellenleitern mit einem glasfaserverstärkten Kunststoff ist an sich bekannt und wird beispielsweise bei Erdkabeln zum Schutz gegen Nagetiere eingesetzt. Bei der Herstellung der Lichtleiteranordnung ist eine aufwendige Haltevorrichtung zum nachträglichen Einbringen von stabilisierenden Stäben nicht mehr nötig.

Dadurch, daß die Schirme unmittelbar auf den Mantel aufgebracht sind, entfällt die sonst übliche Ummantelung eines Lichtwellenleiter-Kabels mit einem Kunststoff. Die Schirme werden also direkt auf den glasfaserverstärkten Kunststoff aufgeklebt, aufgeschrumpft oder aufgespritzt. Wird das für Schirme übliche Material Silikonkautschuk verwendet, so liegt an der Grenzschicht eine von Verbundisolatoren bekannte Stoffkombination aus glasfaserverstärktem Kunststoff und Silikonkautschuk vor. Hierfür sind billige Haftvermittler am Markt erhältlich.

Die Herstellung der Lichtwellenleiteranordnung wird damit gegenüber dem Stand der Technik erheblich vereinfacht und ist zudem kostengünstig.

Eine vorteilhafte Ausgestaltung der Erfindung sieht vor, daß der Lichtwellenleiter zusätzlich mit einer Aderhülle ummantelt ist. Ein solcher ummantelter Lichtwellenleiter stellt gewissermaßen ein übliches käuflich erhältliches Lichtwellenleiter-Kabel dar. Auf das Lichtwellenleiter-Kabel kann in an sich bekannter Art und Weise die Ummantelung aus dem glasfaserverstärkten Kunststoff aufgebracht werden. Dabei kann das Lichtwellenleiter-Kabel beispielsweise durch gleichzeitiges oder abwechselndes Aufbringen der Glasfasern und des noch weichen Kunststoffes und anschließendem Aushärten mit dem glasfaserverstärkten Kunststoff umhüllt werden. Ein für diesen Zweck geeigneter Kunststoff ist beispielsweise ein Epoxidharz.

Weiter ist es vorteilhaft, mehrere Lichtwellenleiter in der Aderhülle zusammenzufassen. Auf diese Weise kann gleichzeitig mehr Information übertragen werden.

Bestehen die Schirme aus einem nicht-fexiblen Werkstoff, so müssen sie untereinander in flexibler Weise verbunden sein, um die Flexibilität zu gewährleisten. Die Schirme können dann einzeln auf den GFK-Mantel aufgeschoben werden.

Weiter ist es vorteilhaft, daß der Mantel mehrere Aderhüllen aufnimmt. Auch hierdurch läßt sich der Informationsaustausch über die Potentialdifferenz hinweg erhöhen. Zudem sind derartige Lichtwellenleiter-Kabel, in denen mehrere Aderhüllen mit darin integrierten Lichtwellenleitern zusammengefaßt sind, übliche, am Markt erhältliche Kabel.

In einer weiteren vorteilhaften Ausgestaltung der Erfindung ist eine direkt auf den Mantel aufgepreßte Anschlußarmatur vorgesehen. Die Anschlußarmatur dient dabei zur Befestigung der Lichtwellenleiteranordnung an der Hochspannungsanlage. Zum Aufpressen wird die Armatur mit Übermaß im Durchmesser auf den GFK-Mantel aufgeschoben und fixiert. Anschließend erfolgt über eine gleichmäßig am Umfang verteilte Krafteinleitung ein Aufpressen der Armatur auf den GFK-Mantel. Dies ist ein übliches Verfahren und beispielsweise zum Aufbringen der Armaturen auf das GFK-Rohr eines Verbundisolators bekannt. Übliche Materialien für die Armatur sind beispielsweise Aluminium, Temperguß und Schmiedestähle. Dadurch, daß die Anschlußarmatur direkt auf den GFK-Mantel aufgepreßt ist, entstehen keinerlei Probleme bezüglich der Abdichtung des Lichtwellenleiters oder der Aderhülle.

Ausführungsbeispiele der Erfindung werden anhand einer Zeichnung näher erläutert.

Dabei zeigt:
- FIG 1: schematisch eine Ansicht der Lichtwellenleiteranordnung,
- FIG 2: in teilweise aufgebrochener Darstellung einen Ausschnitt des beschirmten Teilstücks der Lichtwellenleiteranordnung; und
- FIG 3 und 4: verschiedene Lichtwellenleiteranordnungen im Querschnitt.

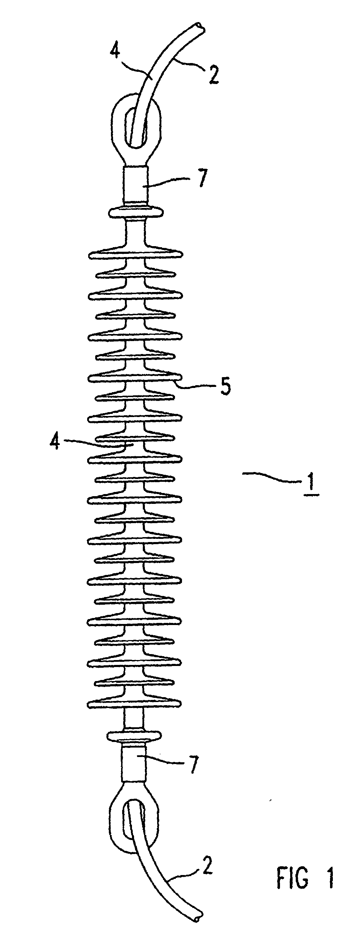

Figur 1 zeigt eine Lichtwellenleiteranordnung 1 mit einem Lichtwellenleiter-Kabel 2, welches sich - nicht näher dargestellt - beispielsweise zwischen einem Hochspannungsleiter und einem auf Erdpotential befindlichen Fundament erstreckt. Die in dem Lichtwellenleiter-Kabel 2 enthaltenen Lichtwellenleiter sind beispielsweise an eine am Hochspannungsleiter angeordnete Meßeinrichtung in Form eines Stromwandlers angekoppelt. Ein solcher Stromwandler kann beispielsweise als ein Faraday-Sensor ausgebildet sein, bei welchem den Hochspannungsleiter eine Lichtwellenleiter-Schleife umgibt.

Die flexible isolierende Hülle 4 des Lichtwellenleiter-Kabels 2 weist zumindest auf einem Teilstück umlaufende Schirme 5 aus einem Isoliermaterial in Form eines Silikonkautschuks auf. Das beschirmte Teilstück überbrückt dabei die elektrische Potentialdifferenz. Die Schirme 5 sind unmittelbar auf einem - hier nicht ersichtlichen - Mantel aus einem glasfaserverstärkten Kunststoff aufgebracht. Als Kunststoff ist Epoxidharz verwendet. Zum Befestigen an der Hochspannungsanlage sind beidseitig des Teilstücks Anschlußarmaturen 7 vorgesehen. Die Anschlußarmaturen 7 sind dabei direkt auf den GFK-Mantel aufgepreßt.

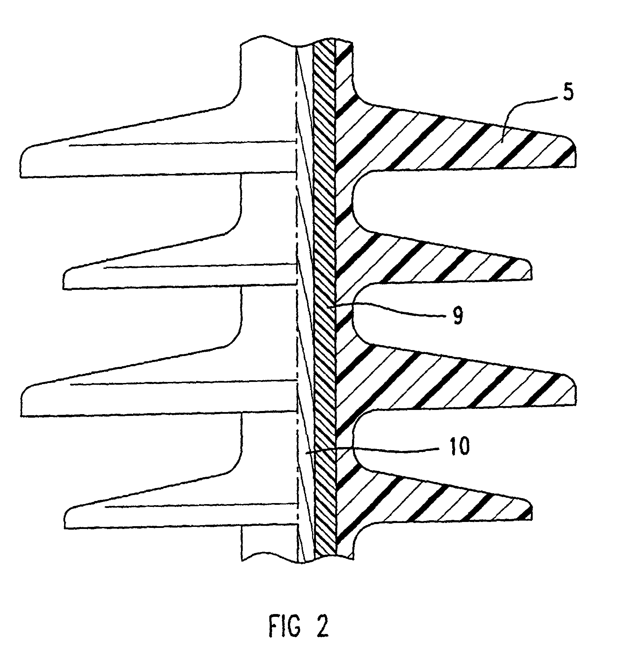

In Figur 2 ist dargestellt, daß die Schirme 5 direkt auf den GFK-Mantel 9 aufgebracht sind. Im Inneren des GFK-Mantels 9 liegt die Aderhülle 10, welche einen oder mehrere Lichtwellenleiter aufnimmt. Die Aderhülle besteht dabei aus PBT, wobei die Lichtwellenleiter, mit einem Gel umgeben, in die Aderhülle eingebettet sind.

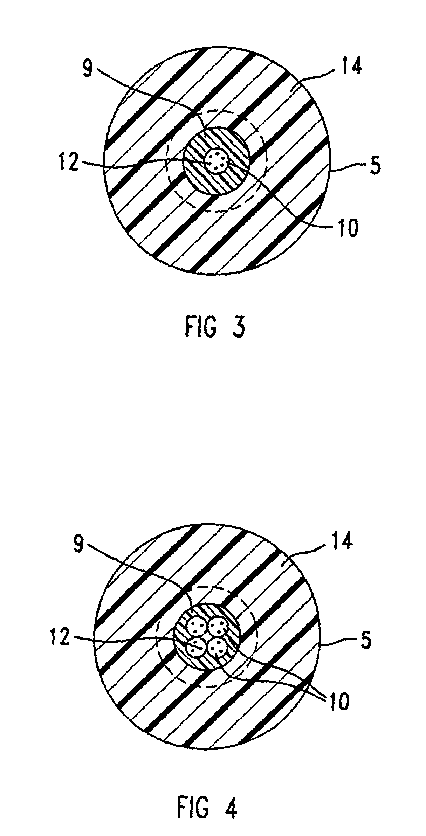

Figur 3 zeigt in einem Querschnitt der Lichtwellenleiteranordnung mehrere Lichtwellenleiter 12 im Inneren der Aderhülle 10. Die Aderhülle 10 ist mit einem Mantel 9 aus glasfaserverstärktem Epoxidharz umhüllt. Direkt auf den GFK-Mantel 9 sind die umlaufenden Schirme 5 aus dem als Isoliermaterial 14 verwendeten Silikonkautschuks aufgebracht.

Eine weitere Ausführungsform ist in Figur 4 dargestellt. Dort sind innerhalb des GFK-Mantels 9 mehrere Aderhüllen 10 angeordnet, in welchen wiederum mehrere Lichtwellenleiter 12 verlaufen. Die Schirme 5 aus dem Isoliermaterial 14 sind direkt auf den GFK-Mantel 9 aufgebracht.

## Patentansprüche

1. Lichtwellenleiteranordnung (1) mit einem Lichtwellenleiter (12) zur Übertragung von Information über eine elektrische Potentialdifferenz hinweg, wobei der Lichtwellenleiter (12) innerhalb einer flexiblen isolierenden Hülle (4) angeordnet ist, die zumindest auf einem Teilstück umlaufende Schirme (5) aus einem Isoliermaterial (14) aufweist,
**dadurch gekennzeichnet, daß** die Schirme (5) unmittelbar auf einen Mantel (9) aus einem glasfaserverstärkten Kunststoff aufgebracht sind, welcher Mantel (9) den Lichtwellenleiter (12) aufnimmt.

2. Lichtwellenleiteranordnung (1) nach Anspruch 1,
**dadurch gekennzeichnet, daß** der Lichtwellenleiter (12) zusätzlich mit einer Aderhülle (10) ummantelt ist.

3. Lichtwellenleiteranordnung (1) nach Anspruch 1 oder 2,
**dadurch gekennzeichnet, daß** mehrere Lichtwellenleiter (12) in der Aderhülle (10) zusammengefaßt sind.

4. Lichtwellenleiteranordnung (1) nach einem der Ansprüche 1 bis 3,
**dadurch gekennzeichnet, daß** der Mantel (9) mehrere Aderhüllen (10) aufnimmt.

5. Lichtwellenleiteranordnung (1) nach einem der Ansprüche 1 bis 4,
**dadurch gekennzeichnet, daß** eine auf den Mantel (9) aufgepreßte Anschlußarmatur (7) vorgesehen ist.

## Claims

1. Optical fibre arrangement (1) with an optical fibre (12) for the transmission of information over an electrical potential difference, the optical fibre (12) being arranged within a flexible insulating sleeve (4), which has, at least on one section, peripheral shields (5) made of an insulating material (14), **characterized in that** the shields (5) are applied directly to a sheath (9) made of a glass fibre reinforced plastic, which sheath (9) receives the optical fibre (12).

2. Optical fibre arrangement (1) according to Claim 1, **characterized in that** the optical fibre (12) is additionally sheathed with a buffer tube (10).

3. Optical fibre arrangement (1) according to Claim 1 or 2, **characterized in that** a plurality of optical fibres (12) are grouped together in the buffer tube (10).

4. Optical fibre arrangement (1) according to one of Claims 1 to 3, **characterized in that** the sheath (9) receives a plurality of buffer tubes (10).

5. Optical fibre arrangement (1) according to one of Claims 1 to 4, **characterized in that** a connection fitting (7) pressed onto the sheath (9) is provided.

## Revendications

1. Dispositif à fibre optique (1) comprenant une fibre optique (12) pour transmettre des informations par une différence de potentiel électrique, la fibre optique (12) se trouvant à l'intérieur d'une gaine (4) flexible isolante qui présente au moins sur un tronçon des blindages (5) périphériques en un matériau isolant (14),
**caractérisé en ce que** les blindages(5) sont appliqués directement sur une enveloppe (9) en une matière synthétique renforcée de fibres de verre, laquelle enveloppe (9) reçoit la fibre optique (12).

2. Dispositif à fibre optique (1) selon la revendication 1 **caractérisé en ce que** la fibre optique (12) est de plus enrobée d'une gaine (10).

3. Dispositif à fibre optique (1) selon la revendication 1 ou 2 **caractérisé en ce que** plusieurs fibres optiques (12) sont rassemblées dans une gaine (10).

4. Dispositif à fibre optique (1) selon l'une des revendications 1 à 3 **caractérisé en ce que** l'enveloppe (9) reçoit plusieurs gaines conductrices (10).

5. Dispositif à fibre optique (1) selon l'une des revendications 1 à 4 **caractérisé en ce qu'**on prévoit une armature de raccordement (7) appliquée par pression sur l'enveloppe (9).
